(19) Europäisches Patentamt
European Patent Office
Office européen des brevets

(11) **EP 1 944 481 B1**

(12) **EUROPÄISCHE PATENTSCHRIFT**

(45) Veröffentlichungstag und Bekanntmachung des Hinweises auf die Patenterteilung:
**10.11.2010 Patentblatt 2010/45**

(51) Int Cl.:
*F01N 11/00* (2006.01)    *F01N 3/08* (2006.01)
*G01N 27/417* (2006.01)    *G01N 33/00* (2006.01)
*G01N 27/419* (2006.01)

(21) Anmeldenummer: **08100153.9**

(22) Anmeldetag: **07.01.2008**

(54) **Vorrichtung zur Abschätzung des Beladungszustandes eines NOx-Speicherkatalysators**

Device for estimating the loading state of a NOx storage catalytic converter

Corps de connecteur électrique doté de poutres d'ancrage terminales en saillie

(84) Benannte Vertragsstaaten:
**DE FR GB**

(30) Priorität: **09.01.2007 DE 102007001417**

(43) Veröffentlichungstag der Anmeldung:
**16.07.2008 Patentblatt 2008/29**

(73) Patentinhaber: **Ford Global Technologies, LLC Dearborn, MI 48126 (US)**

(72) Erfinder: **Yacoub, Yasser Mohammed Sayed 50858, Köln (DE)**

(74) Vertreter: **Dörfler, Thomas Henry-Ford-Strasse 1 50735 Köln (DE)**

(56) Entgegenhaltungen:
**EP-A2- 1 505 285**    **US-A1- 2002 108 367**
**US-A1- 2003 140 622**

• **"Lambdasonde" 11. September 2009 (2009-09-11), XP002542973 Gefunden im Internet: URL:http://de.wikipedia.org/wiki/Lambdason de> [gefunden am 2009-08-25]**

**Beschreibung**

Die vorliegende Erfindung betrifft eine Vorrichtung zur Abschätzung des Beladungszustandes eines NO$_x$-Speicherkatalysators.

NO$_x$-Speicherkatalysatoren dienen zur Absorption und Speicherung von Stickoxiden (NO$_x$), welche insbesondere von Dieselmotoren im Magerbetrieb emittiert werden. Wenn ein NO$_x$-Speicherkatalysator mit Stickoxidmolekülen gesättigt ist, ist zur Regeneration des NO$_x$-Speicherkatalysators eine Betriebsphase mit fettem Luft/Kraftstoff-Verhältnis für eine Dauer von typischerweise einigen Sekunden erforderlich. Hierbei werden die gespeicherten Stickoxidmoleküle freigesetzt und in unbedenkliche Komponenten (insbesondere Stickstoff, Kohlendioxid und Wasserdampf) umgewandelt. Die Häufigkeit, mit der eine solche Regeneration zu erfolgen hat, ist von den Stickoxidemissionen des Verbrennungsmotors sowie von der Speicherkapazität des NO$_x$-Speicherkatalysators und von der Temperatur der Abgase des Verbrennungsmotors abhängig.

Bekannte Verfahren zur Bestimmung der geeigneten Zeitpunkte, zu denen eine Regeneration des NO$_x$-Speicherkatalysators erforderlich ist, beinhalten die Abschätzung der NO$_x$-Beladung in Abhängigkeit von der NO$_x$-Emissionsrate und der Speicherkapazität des NO$_x$-Speicherkatalysators. Dabei wird die NO$_x$-Emissionsrate des Verbrennungsmotors entweder mittels eines NO$_x$-Sensors direkt gemessen oder modellgestützt abgeschätzt. In einem solchen NO$_x$-Modell werden üblicherweise die im Abgas des Verbrennungsmotors gemessenen NO$_x$-Konzentrationen in Funktion des Betriebszustandes des Verbrennungsmotors (d. h. der Motordrehzahl und der Motorlast) aufgelistet und in Abhängigkeit von der Kühlmitteltemperatur sowie der Zusammensetzung des zurückgeführten Abgases korrigiert.

Die Speicherkapazität des NO$_x$-Speicherkatalysators wird in Abhängigkeit von der gemessenen oder abgeschätzten Katalysatortemperatur sowie der abgeschätzten NO$_x$-Beladung aufgelistet. Der geeignete Zeitpunkt für einen Abbruch der Regenerationsphase wird üblicherweise unter Verwendung einer stromabwärts angeordneten Lambda-Sonde ermittelt. Gemäß einem anderen Ansatz kann auch ein Modell zur Ermittlung der NO$_x$-Umwandlungsrate verwendet werden, wobei die Regenerationsphase abgebrochen wird, wenn die berechnete Beladung einen vorgegebenen Schwellenwert unterschreitet. Zur Realisierung einer bordseitigen Diagnose (OBD = "on board diagnostic") wird ein stromabwärts des NO$_x$-Speicherkatalysators angeordneter NO$_x$-Sensor verwendet, um zu signalisieren, wenn die NO$_x$-Emissionen die vorgeschriebenen Grenzwerte überschreiten.

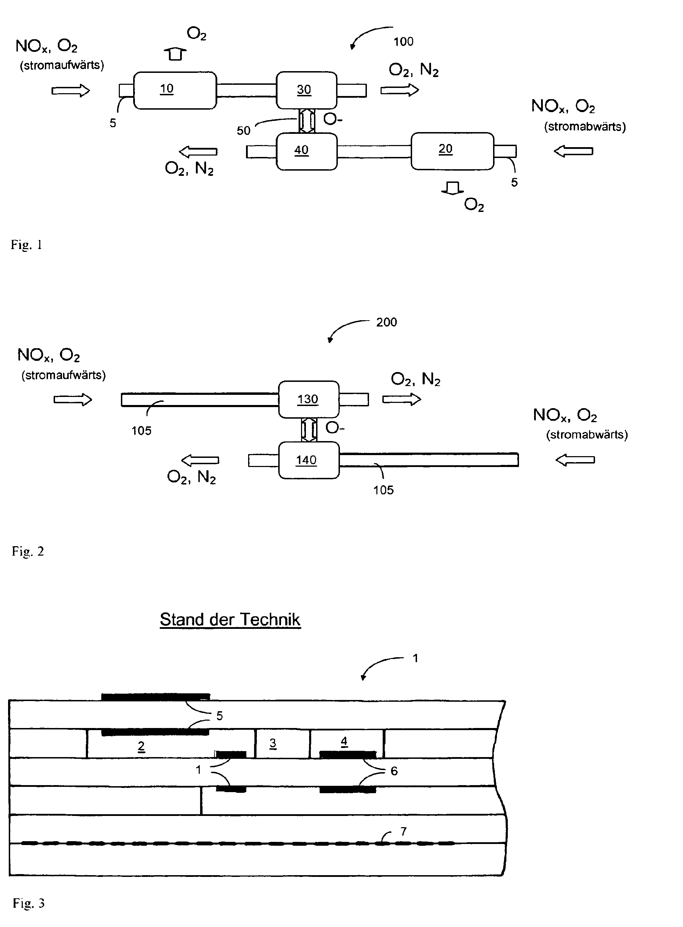

Aus einer Mehrzahl von Veröffentlichungen, beispielsweise US 6,645,361 B1 sowie z.B. der SAE-Veröffentlichung "Thick Film ZrO$_2$ NO$_x$ Sensor " von N. Kato et al., Publikation Nr. 960334 der Society of Automotive Engineers, Inc., Reprint von Electronic Engine Controls 1996 (SP-1149), International Congress & Exposition, Detroit (Michigan), 26.-29. Februar 1996, sind zur NO$_x$-Bestimmung verwendbare elektrochemische Gassensoren bekannt, welche gemäß dem in Fig. 3 - lediglich schematisch - dargestellten Aufbau eines solchen Gassensors 1 eine mit einer ersten Kammer 2 über einen sich durch eine Diffusionsbarriereschicht 3 erstreckenden Kanal verbundene zweite Kammer 4 aufweisen. In der ersten Kammer 2 wird über Pumpelektroden 5 mittels Zu- oder Abfuhr von Sauerstoff ein konstanter vorbestimmter Sauerstoffpartialdruck erzeugt. Das über den Kanal der zweiten Kammer 4 zugeführte Gas wird mittels Elektroden 6, von denen die in der zweiten Kammer 4 angeordnete Elektrode ein katalytisches Material aufweist, unter Erzeugung von Stickstoff und Sauerstoff reduziert, woraufhin eine zur NO$_x$-Konzentration proportionale Pumpspannung abgegriffen wird. Des Weiteren ist eine Heizvorrichtung 7 vorgesehen, mittels welcher die Temperatur der Kammern bzw. der Pumpelektroden für einen effizienteren Betrieb auf etwa 600 °C bis 700°C erhöht werden kann und welche z.B. durch eine isolierende Al$_2$O$_3$-Schicht umgeben sein kann.

Zur Ermittlung der NO$_x$-Beladung eines NO$_x$-Speicherkatalysators ist es bekannt, zwei NO$_x$-Sensoren einzusetzen, von denen der eine stromaufwärts des NO$_x$-Speicherkatalysators und der andere stromabwärts des NO$_x$-Speicherkatalysators angeordnet ist, was jedoch im Hinblick auf die notwendige Ausstattung der entsprechenden Überwachungseinrichtung für den Beladungszustand mit zwei NO$_x$-Sensoren mit einem beträchtlichen apparativen Aufwand und entsprechenden Kosten verbunden ist. Derartige Anordnungen sind beispielsweise aus der US 2002/108367, der US 2003/140622 oder der EP 1 505 285 bekannt.

Vor dem obigen Hintergrund ist es eine Aufgabe der vorliegenden Erfindung, eine Vorrichtung zur Abschätzung des Beladungszustandes eines NO$_x$-Speicherkatalysators bereitzustellen, welche eine zuverlässige Ermittlung der NO$_x$-Beladung bei verringertem apparativem Aufwand ermöglicht.

Diese Aufgabe wird gemäß den Merkmalen des unabhängigen Anspruchs 1 gelöst.

Eine Vorrichtung zur Abschätzung des Beladungszustandes eines NO$_x$-Speicherkatalysators weist eine Einrichtung zur Bestimmung der Sauerstoffkonzentrationsdifferenz zwischen einer im Abgas stromaufwärts des NO$_x$-Speicherkatalysators vorliegenden Sauerstoffkonzentration und einer im Abgas stromabwärts des NO$_x$-Speicherkatalysators vorliegenden Sauerstoffkonzentration, sowie eine Einrichtung zur Abschätzung des Beladungszustandes des NO$_x$-Speicherkatalysators auf Basis dieser Sauerstoffkonzentrationsdifferenz auf.

Dadurch, dass erfindungsgemäß die Abschätzung des Beladungszustandes des NO$_x$-Speicherkatalysators unmittelbar basierend auf der Sauerstoffkonzentrationsdifferenz zwischen einer im Abgas stromaufwärts des NO$_x$-Speicherkatalysators vorliegenden Sauerstoffkonzentration und einer im Abgas stromabwärts des NO$_x$-Speicherkatalysators

vorliegenden Sauerstoffkonzentration erfolgt, wird eine wesentliche Reduzierung des apparativen Aufwandes und der hiermit verbundenen Kosten erreicht, da der Aufwand zur Ansteuerung (insbesondere Aufheizung) der Apparatur sowie zur Verarbeitung und Auswertung der gelieferten Signale nicht wie herkömmlicherweise für zwei eine absolute Sauerstoffkonzentration messende Sensoren erforderlich ist, sondern auf ein einziges Modul beschränkt werden kann. Des Weiteren hat die Abschätzung des Beladungszustandes des $NO_x$-Speicherkatalysators unmittelbar auf Basis der Sauerstoffkonzentrationdifferenz meßtechnische Vorteile infolge der bei einer Differenzmessung im Vergleich zu einer Absolutwertbestimmung erreichbaren wesentlichen Verringerung der absoluten Meßfehler.

Weitere Ausgestaltungen der Erfindung sind der Beschreibung sowie den Unteransprüchen zu entnehmen.

Die Erfindung wird nachstehend anhand bevorzugter Ausführungsbeispiele und unter Bezugnahme auf die beigefügten Abbildungen erläutert. Es zeigen:

Figur 1     eine schematische Darstellung des Aufbaus einer erfindungsgemäßen Vorrichtung zur Überwachung des Beladungszustandes eines $NO_x$-Speicherkatalysators gemäß einer ersten Ausführungsform;

Figur 2     eine schematische Darstellung einer weiteren Ausführungsform der Erfindung; und

Figur 3     eine schematische Darstellung des Aufbaus eines elektrochemischen $NO_x$-Sensors gemäß dem Stand der Technik.

Gemäß Fig. 1 umfaßt eine erfindungsgemäße Vorrichtung 100 zur Überwachung des Beladungszustandes eines (nicht dargestellten) $NO_x$-Speicherkatalysators eine Kammer 10, welche stromaufwärts von dem $NO_x$-Speicherkatalysator an eine Abgasleitung 5 angeschlossen ist, sowie eine weitere Kammer 20, welche stromabwärts des NO,-Speicherkatalysators an die Abgasleitung 5 angeschlossen ist. Den Kammern 10 bzw. 20 wird das Abgas, welches insbesondere $NO_x$ und $O_2$ enthält, über eine definierte Diffusionsbarriere bzw. einen vorbestimmten Diffusionswiderstand zugeführt. Die Kammern 10 und 20 weisen jeweils eine elektrochemische Pumpzelle mit zumindest einer inneren Pumpelektrode auf, mittels der der Sauerstoffgehalt des in der jeweiligen Kammer 10 bzw. 20 befindlichen Abgases auf ein vorbestimmtes Niveau (typischerweise 1000 ppm) reduziert wird, wobei in den Kammern 10 und 20 jeweils noch keine $NO_x$-Umwandlung erfolgt. Zur Einstellung des besagten konstanten Sauerstoff-Niveaus kann beispielsweise eine Pumpspannung vom 150 mV an die Kammern 10, 20 angelegt werden. Jede der Kammern 10 und 20 ist mit jeweils einer weiteren Kammer 30 bzw. 40 verbunden, wobei letzteren Kammern 30, 40 das Abgas nach erfolgter Reduzierung des Sauerstoffgehaltes in den Kammern 10 und 20 ebenfalls über eine definierte Diffusionsbarriere bzw. einen vorbestimmten Diffusionswiderstand zugeführt wird.

Die Realisierung der jeweils miteinander über einen vorbestimmten Diffusionswiderstand verbundenen Kammern 10, 30 bzw. 20, 40 kann beispielsweise in jeweils einem $ZrO_2$-Vielfachschichtsystem erfolgen, in welchem die jeweiligen Kammern 10, 30 bzw. 20, 40 als innere Hohlräume bzw. Kavitäten zwischen benachbarten $ZrO_2$-Schichten ausgebildet sind. Der geeignete Aufbau eines $ZrO_2$-Vielfach-schichtsystems ist grundsätzlich bekannt, beispielsweise aus der eingangs zitierten SAE-Veröffentlichung Veröffentlichung "Thick Film $ZrO_2$ $NO_x$ Sensor " von N. Kato et al., Publikation Nr. 960334 der Society of Automotive Engineers, Inc., Reprint von Electronic Engine Controls 1996 (SP-1149), International Congress & Exposition, Detroit (Michigan), 26.-29. Februar 1996, wobei auf die in Fig. 3 gezeigte schematische Anordnung verwiesen wird. Die Pumpelektroden für die Kammern 10-40 können z.B. als poröse Elektroden aus Platin (Pt) oder Rhodium (Rh) mit einer typischen Dicke von 10 $\mu$m ausgebildet sein. Des Weiteren ist jeweils eine Heizvorrichtung vorgesehen, mittels der die Temperatur der Kammern bzw. der Pumpelektroden für einen effizienteren Betrieb auf etwa 600 °C bis 700 °C erhöht werden kann und die durch eine isolierende $Al_2O_3$-Schicht umgeben sein kann.

In den Kammern 30, 40 wird der Sauerstoffgehalt des in der jeweiligen Kammer 30 bzw. 40 befindlichen Gases weiter reduziert, wobei hierbei typischerweise ein Niveau von 0.0001 ppm eingestellt werden kann. Zur Einstellung des besagten konstanten Sauerstoff-Niveaus kann beispielsweise eine Pumpspannung von 450mV an die jeweiligen Kammern 30, 40 angelegt werden. Infolgedessen wird in den Kammern 30 und 40 der $NO_x$-Gehalt des in den jeweiligen Kammern 30, 40 befindlichen Abgases reduziert, wobei eine Reaktion zu Stickstoff und Sauerstoff gemäß der Reaktionsgleichung:

$$ NO \rightarrow \tfrac{1}{2} * N_2 + \tfrac{1}{2} * O_2 \qquad\qquad (1) $$

stattfindet. Die Reduktion des $NO_x$ kann ferner durch Ausbildung der Pumpelektrode in der betreffenden Kammer 30, 40 aus einem katalytischen Material wie z.B. Rhodium (Rh) unterstützt werden.

Da somit der Partialdruck bzw. die Konzentration des Sauerstoffs in der betreffenden Kammer 30 bzw. 40

proportional zu der $NO_x$-Konzentration in der betreffenden Kammer ist, ist der Sauerstoffpartialdruck in der Kammer 30 ein indirektes Maß für die $NO_x$-Konzentration in der Abgasleitung stromaufwärts des $NO_x$-Speicherkatalysators, und der Sauerstoffpartialdruck in der Kammer 40 ist ebenso ein Maß für die $NO_x$-Konzentration in der Abgasleitung stromabwärts des $NO_x$-Speicherkatalysators.

Die Erfindung macht sich nun zunutze, daß eine zwischen den Kammern 30 und 40 vorhandene Differenz der Sauerstoffpartialdrücke bzw. -konzentrationen ein Maß für die Differenz zwischen der stromaufwärtigen und der stromabwärtigen $NO_x$-Konzentration darstellt.

Zwischen den beiden Kammern 30 und 40 befindet sich eine Nernstzelle 50, in welcher eine elektromotorische Kraft $E_F$ erzeugt wird, für die die folgende Beziehung gilt:

$$E_F = \ln(P_{O2,\,30} / P_{O2,\,40}) \tag{2}$$

Dabei bezeichnet $P_{O2,30}$ den Sauerstoffpartialdruck in der Kammer 30 und $P_{O2,40}$ bezeichnet den Sauerstoffpartialdruck in der Kammer 40. Ein (in Fig. 1 nicht dargestellter) Sensor mißt die in der Nernstzelle 50 erzeugte elektromotorische Kraft $E_F$ und gibt ein entsprechendes Ausgangssignal aus, welches als Maß für die Differenz zwischen der $NO_x$-Konzentration stromaufwärts des $NO_x$-Speicherkatalysators und der $NO_x$-Konzentration stromabwärts des $NO_x$-Speicherkatalysators dient.

In einem weiteren Schritt wird die $NO_x$-Beladung des $NO_x$-Speicherkatalysators mittels folgender Gleichung abgeschätzt:

$$\text{Beladung } (NO_x) = \int (\Delta(NO_x) - U(NO_x)) \tag{3},$$

wobei $\Delta(NO_x)$ die Differenz zwischen der $NO_x$-Konzentration stromaufwärts des $NO_x$-Speicherkatalysators und der $NO_x$-Konzentration stromabwärts des $NO_x$ Speicherkatalysators bezeichnet, und wobei $U(NO_x)$ die $NO_x$-Umwandlungsrate bezeichnet. Diese Rate $U(NO_x)$ der $NO_x$-Umwandlung wird in für sich bekannter Weise modellgestützt als Funktion der gespeicherten $NO_x$-Konzentration, der Temperatur des $NO_x$-Speicherkatalysators, dem Luft/Kraftstoff-Verhältnis im Abgas ("richness") sowie dem Abgasmassenstrom berechnet.

Die in Fig. 1 gezeigte erfindungsgemäße Anordnung hat ersichtlich den Vorteil einer wesentlichen Reduzierung des apparativen Aufwandes und der hiermit verbundenen Kosten, da der Aufwand zur Ansteuerung (insbesondere Erwärmung) eines Sensors sowie zur Verarbeitung und Auswertung der von einem Sensor gelieferten Signale nicht wie herkömmlicherweise für zwei Sensoren erforderlich ist, sondern auf ein einziges Modul beschränkt werden kann.

Gemäß einer alternativen Ausführungsform kann auch ein elektrochemisches Pumpen von Sauerstoff ($O_2$) von der Kammer 40 in die Kammer 30 oder umgekehrt erfolgen, wobei ein Stromsignal erzeugt wird, welches proportional zur Differenz der $NO_x$-Konzentrationen in der Abgasleitung stromaufwärts des $NO_x$ Speicherkatalysators und stromabwärts des $NO_x$-Speicherkatalysators ist.

Gemäß einer weiteren, in Fig. 2 schematisch dargestellten Ausführungsform kann in Abwandlung der in Fig. 1 gezeigten Vorrichtung 100 auch auf die Kammern 10 und 20 verzichtet werden. Dabei sind im Vergleich zu Fig. 1 im Wesentlichen funktionsgleiche Elemente mit entsprechenden, um 100 erhöhten Bezugsziffern bezeichnet. Bei der in Fig. 2 gezeigten Vorrichtung 200 erfolgt ein elektrochemisches Pumpen zwischen den Kammern 130 und 140. Hierbei wird ein Stromsignal erzeugt, welches proportional zur Differenz der Sauerstoffpartialdrücke bzw. der Sauerstoffkonzentrationen in den Kammern 130 und 140 ist, und somit ebenfalls ein Maß für die Differenz zwischen der $NO_x$-Konzentration stromaufwärts des $NO_x$-Speicherkatalysators und der $NO_x$-Konzentration stromabwärts des $NO_x$-Speicherkatalysators darstellt.

Gemäß der vorliegenden Erfindung wird somit zur Überwachung des Beladungszustandes eines $NO_x$-Speicherkatalysators anstelle einer direkten Messung absoluter Werte der $NO_x$-Konzentration (bzw. den hierfür kennzeichnenden Sauerstoffpartialdrücken) die Differenz zwischen den Sauerstoffpartialdrücke bzw. der Sauerstoffkonzentrationen in den Kammern 130 und 140 (und damit die Differenz $\Delta(NO_x)$ zwischen der $NO_x$-Konzentration stromaufwärts des $NO_x$-Speicherkatalysators und der $NO_x$-Konzentration stromabwärts des $NO_x$-Speicherkatalysators) ermittelt.

**Patentansprüche**

1.   Vorrichtung zur Abschätzung des Beladungszustandes eines $NO_x$-Speicherkatalysators, wobei der $NO_x$-Speicherkatalysator im Abgas eines Verbrennungsmotors enthaltene Stickoxide speichert und die Vorrichtung aufweist:

eine Einrichtung zur Bestimmung der Sauerstoffkonzentrationsdifferenz zwischen einer im Abgas stromaufwärts des $NO_x$-Speicherkatalysators vorliegenden Sauerstoffkonzentration und einer im Abgas stromabwärts des $NO_x$-Speicherkatalysators vorliegenden Sauerstoffkonzentration; und

eine Einrichtung zur Abschätzung des Beladungszustandes des $NO_x$-Speicherkatalysators auf Basis dieser Sauerstoffkonzentrationsdifferenz,

**dadurch gekennzeichnet, daß**

die Einrichtung zur Bestimmung der Sauerstoffkonzentrationsdifferenz ausgelegt ist für eine Bestimmung der Sauerstoffkonzentrationsdifferenz zwischen einer ersten Sauerstoffkonzentration, welche in einer in einem in Bezug auf den $NO_x$-Speicherkatalysator stromaufwärtigen Abschnitt der Abgasleitung (5, 105) vorgesehenen ersten Kammer (30, 130) vorliegt, und einer zweiten Sauerstoffkonzentration, welche in einer in einem in Bezug auf den $NO_x$-Speicherkatalysator stromabwärtigen Abschnitt der Abgasleitung (5, 105) vorgesehenen zweiten Kammer (40, 140) vorliegt, wobei die erste Kammer (30, 130) und die zweite Kammer (40, 140) jeweils Mittel zur Reduktion von Stickoxid ($NO_x$) zu Stickstoff und Sauerstoff aufweisen.

2. Vorrichtung nach Anspruch 1,
**dadurch gekennzeichnet, daß**
die Einrichtung zur Bestimmung der Sauerstoffkonzentrationsdifferenz eine zwischen einem in Bezug auf den $NO_x$-Speicherkatalysator stromaufwärtigen Abschnitt der Abgasleitung (5) und einem in Bezug auf den $NO_x$-Speicherkatalysator stromabwärtigen Abschnitt der Abgasleitung (5) vorgesehene Nernstzelle (50) aufweist.

3. Vorrichtung nach Anspruch 1 und 2,
**dadurch gekennzeichnet, daß**
die Nernstzelle (50) an einem Ende an die in dem in Bezug auf den $NO_x$-Speicherkatalysator stromaufwärtigen Abschnitt der Abgasleitung (5) vorgesehene erste Kammer (30) und an dem anderen Ende an die in dem in Bezug auf den $NO_x$-Speicherkatalysator stromabwärtigen Abschnitt der Abgasleitung (5) vorgesehene zweite Kammer (40) angeschlossen ist.

4. Vorrichtung nach Anspruch 1,
**dadurch gekennzeichnet, daß**
Mittel zum elektrochemischen Pumpen von Sauerstoff zwischen der ersten Kammer (130) und der zweiten Kammer (140) vorgesehen sind.

5. Vorrichtung nach einem der Ansprüche 1 bis 4,
**dadurch gekennzeichnet, daß**
die erste Kammer (30) an eine in Bezug auf den $NO_x$-Speicherkatalysator stromaufwärtigen Abschnitt der Abgasleitung (5) vorgesehene dritte Kammer (10) und die zweite Kammer (40) an eine in dem in Bezug auf den $NO_x$-Speicherkatalysator stromabwärtigen Abschnitt der Abgasleitung (5) vorgesehene vierte Kammer (20) angeschlossen ist, wobei die dritte Kammer (10) und die vierte Kammer (20) jeweils Mittel zur Reduzierung der Sauerstoffkonzentration auf ein vorbestimmtes Niveau aufweisen.

6. Vorrichtung nach einem der vorhergehenden Ansprüche,
**dadurch gekennzeichnet, daß**
die Einrichtung zur Abschätzung des Beladungszustandes des $NO_x$-Speicherkatalysators eine Abschätzung auf Basis der Beziehung

$$\text{Beladung } (NO_x) = \int (\Delta(NO_x) - U(NO_x))$$

durchführt, wobei $\Delta(NO_x)$ eine aus der Sauerstoffkonzentrationsdifferenz berechnete $NO_x$-Konzentrationsdifferenz zwischen der $NO_x$-Konzentration stromaufwärts des $NO_x$-Speicherkatalysators und der $NO_x$-Konzentration stromabwärts des $NO_x$-Speicherkatalysators bezeichnet, und wobei $U(NO_x)$ die $NO_x$-Umwandlungsrate in dem $NO_x$-Speicherkatalysator bezeichnet.

**Claims**

1. Device for estimating the loading state of a $NO_X$ storage catalytic converter, with the $NO_X$ storage catalytic converter storing nitrogen oxides which are contained in the exhaust gas of an internal combustion engine and the device has:

a device for determining the oxygen concentration difference between an oxygen concentration present in the exhaust gas upstream of the $NO_X$ storage catalytic converter and an oxygen concentration present in the exhaust gas downstream of the $NO_X$ storage catalytic converter, and
a device for estimating the loading state of the $NO_X$ storage catalytic converter on the basis of said oxygen concentration difference,
wherein
the device for determining the oxygen concentration diffrence is designed to determine the oxygen concentration difference between a first oxygen concentration which is present in a first chamber (30, 130) which is provided in a section of the exhaust line (5, 105) which is upstream of the $NO_X$ storage catalytic converter, and a second oxygen concentration which is present in a second chamber (40, 140) which is provided in a section of the exhaust line (5, 105) which is downstream of the $NO_X$ storage catalytic converter, with the first chamber (30, 130) and the second chamber (40, 140) in each case having means for reducing nitrogen oxide ($NO_X$) to form nitrogen and oxygen.

2. Device as claimed in Claim 1,
wherein
the device for determining the oxygen concentration difference has a Nernst cell (50) provided between a section of the exhaust line (5) which is upstream of the $NO_X$ storage catalytic converter and a section of the exhaust line (5) which is downstream of the $NO_X$ storage catalytic converter.

3. Device as claimed in Claim 1 and 2,
wherein
the Nernst cell (50) is connected at one end to the first chamber (30) which is provided in the section of the exhaust line (5) which is upstream of the $NO_X$ storage catalytic converter and at the other end to the second chamber (40) which is provided in the section of the exhaust line (5) which is downstream of the $NO_X$ storage catalytic converter.

4. Device according to Claim 1,
wherein
means for electrochemical pumping of oxygen between the first chamber (130) and the second chamber (140) are provided.

5. Device according to one of Claims 1 to 4,
wherein
the first chamber (30) is connected to a third chamber (10) which is provided in the section of the exhaust line (5) which is upstream of the $NO_X$ storage catalytic converter, and the second chamber (40) is connected to a fourth chamber (20) which is provided in the section of the exhaust line (5) which is downstream of the $NO_X$ storage catalytic converter, with the third chamber (10) and the fourth chamber (20) in each case having means for reducing the oxygen concentration to a predetermined level.

6. Device according to one of the preceding claims
wherein
the device for estimating the loading state of the $NO_X$ storage catalytic converter carries out an estimation on the basis of the relationship

$$\text{Loading } (NO_X) = \int (\Delta(NO_X) - U(NO_X)),$$

where $\Delta(NO_X)$ denotes a $NO_X$ concentration difference, calculated from the oxygen concentration difference, between the $NO_X$ concentration upstream of the $NO_X$ storage catalytic converter and the $NO_X$ concentration downstream of the $NO_X$ storage catalytic converter, and where $U(NO_X)$ denotes the $NO_X$ conversion rate in the $NO_X$ storage catalytic converter.

**Revendications**

1. Dispositif pour estimer l'état de charge d'un catalyseur à accumulation de $NO_X$, le catalyseur à accumulation de $NO_X$ accumulant les oxydes d'azote contenus dans le gaz d'échappement d'un moteur à combustion interne et le dispositif présentant :

   un dispositif pour déterminer la différence de concentration d'oxygène entre une concentration d'oxygène présente dans le gaz d'échappement en amont du catalyseur à accumulation de $NO_X$ et une concentration d'oxygène présente dans le gaz d'échappement en aval du catalyseur à accumulation de $NO_X$ ; et
   un dispositif pour estimer l'état de charge du catalyseur à accumulation de $NO_X$ sur la base de cette différence de concentration d'oxygène,
   **caractérisé en ce que**
   le dispositif pour déterminer la différence de concentration d'oxygène est conçu pour déterminer la différence de concentration d'oxygène entre une première concentration d'oxygène qui est présente dans une première chambre (30, 130) prévue dans une portion de la conduite d'échappement (5, 105) en amont par rapport au catalyseur à accumulation de $NO_X$, et une deuxième concentration d'oxygène qui est présente dans une deuxième chambre (40, 140) prévue dans une portion de la conduite d'échappement (5, 105) en aval par rapport au catalyseur à accumulation de $NO_x$, la première chambre (30, 130) et la deuxième chambre (40, 140) présentant à chaque fois des moyens pour réduire les oxydes d'azote ($NO_x$) en azote et en oxygène.

2. Dispositif selon la revendication 1,
   **caractérisé en ce que**
   le dispositif pour déterminer la différence de concentration d'oxygène présente une cellule de Nernst (50) prévue entre une portion de la conduite d'échappement (5) en amont par rapport au catalyseur à accumulation de $NO_x$ et une portion de la conduite d'échappement (5) en aval par rapport au catalyseur à accumulation de $NO_x$.

3. Dispositif selon les revendications 1 et 2,
   **caractérisé en ce que**
   la cellule de Nernst (50) est raccordée à une extrémité à la première chambre (30) prévue dans la portion de la conduite d'échappement (5) en amont par rapport au catalyseur à accumulation de $NO_X$ et à l'autre extrémité à la deuxième chambre (40) prévue dans la portion de la conduite d'échappement (5) en aval par rapport au catalyseur à accumulation de $NO_x$.

4. Dispositif selon la revendication 1,
   **caractérisé en ce que**
   des moyens sont prévus pour le pompage électrochimique d'oxygène entre la première chambre (130) et la deuxième chambre (140).

5. Dispositif selon l'une quelconque des revendications 1 à 4,
   **caractérisé en ce que**
   la première chambre (30) est raccordée à une troisième chambre (10) prévue dans la portion de la conduite d'échappement (5) en amont par rapport au catalyseur à accumulation de $NO_X$ et la deuxième chambre (40) est raccordée à une quatrième chambre (20) prévue dans la portion de la conduite d'échappement (5) en aval par rapport au catalyseur à accumulation de $NO_x$, la troisième chambre (10) et la quatrième chambre (20) présentant à chaque fois des moyens pour réduire la concentration d'oxygène à un niveau prédéterminé.

6. Dispositif selon l'une quelconque des revendications précédentes,
   **caractérisé en ce que**
   le dispositif pour estimer l'état de charge du catalyseur à accumulation de $NO_X$ effectue une estimation sur la base de la relation suivante :

$$Ch\arg e(NOx) = \int (\Delta(NOx) - U(NOx))$$

$\Delta(NO_x)$ représentant une différence de concentration de $NO_x$ calculée à partir de la différence de concentration d'oxygène entre la concentration de $NO_x$ en amont du catalyseur à accumulation de $NO_x$ et la concentration de $NO_x$ en aval du catalyseur à accumulation de $NO_x$, $U(NO_x)$ représentant le taux de conversion de $NO_x$ dans le

catalyseur à accumulation de $NO_x$.

$NO_x, O_2$
(stromaufwärts)

$O_2$

100

$O_2, N_2$

$NO_x, O_2$
(stromabwärts)

10

30

5

50

O-

40

20

$O_2, N_2$

5

$O_2$

Fig. 1

200

$NO_x, O_2$
(stromaufwärts)

$O_2, N_2$

$NO_x, O_2$
(stromabwärts)

130

105

O-

140

$O_2, N_2$

105

Fig. 2

Stand der Technik

1

5

2

3

4

1

6

7

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6645361 B1
- US 2002108367 A
- US 2003140622 A
- EP 1505285 A
- WO 960334 A